Europäisches Patentamt

European Patent Office

Office européen des brevets

(11) Veröffentlichungsnummer: **0 000 558**
A1

# (12) EUROPÄISCHE PATENTANMELDUNG

(21) Anmeldenummer: 78100462.7

(22) Anmeldetag: 21.07.78

(51) Int. Cl.²: **B 29 C 27/10**, B 32 B 27/00

(30) Priorität: 29.07.77 DE 2734294

(43) Veröffentlichungstag der Anmeldung:
07.02.79 Bulletin 79/3

(84) Benannte Vertragsstaaten:
DE FR NL SE

(71) Anmelder: BASF Aktiengesellschaft
Carl-Bosch-Strasse 38
D-6700 Ludwigshafen. (DE)

(72) Erfinder: Koenig, Ulrich, Dr.
Londonor Ring 83
D-6700 Ludwigshafen. (DE)

(72) Erfinder: Druschke, Wolfgang, Dr.
Berliner Strasse 28
D-6711 Dirmstein. (DE)

(54) Schichtstoffe, deren Schichten mittels einer Haftvermittlerschicht miteinander verbunden sind.

(57) Die Erfindung betrifft Schichtstoffe, die als haftvermittelnde Schicht im wesentlichen ein Äthylen-Alkylacrylat-Copolymerisat aufweisen, welches 15 bis 80 Gew.% eines alkylacrylats mit 1 bis 4 C-Atomen im Alkylrest einpolymerisiert enthält. Das Copolymerisat kann gegebenenfalls Zusätze bis zu Konzentrationen von 45 Gew.%, bezogen auf die Haftvermittlungsschicht, enthalten. Das Copolymerisat soll einen Schmelzindex bei 190°C und 2,16 kp (DIN 53 735) von 1 bis 40 g/10 min aufweisen.

Der Erweichungspunkt der haftvermittelnden Schicht soll im Bereich von 125 bis 140°C liegen (DIN 1995, Ring und Kugel). Er soll dem Erweichungspunkt der zu verbindenden thermoplastischen Kunststoffe wie Olefine, Styrolhomo- oder Copolymerisate oder gegebenenfalls schlagzäh modifizierte Vertreter und anderen Thermoplasten, wie PVC, Polyamid, Polycarbonat, Polyvinylalkohol und/oder Polyurethanen angepaßt werden.

EP 0 000 558 A1

BEZEICHNUNG GEÄNDERT
siehe Titelseite

BASF Aktiengesellschaft                    O.Z.   0050/032 718

⌐Schichtstoffe

Die Erfindung betrifft den Einsatz von Äthylen-Alkylacrylat-Copolymerisaten als Haftvermittler für die Herstellung
von Schichtstoffen aus thermoplastischen Kunststoffen.

Es ist bekannt, Äthylen-Alkylacrylat-Copolymerisate zur
Herstellung von Verbundsystemen einzusetzen. So wird beispielsweise in der DT-OS 2 329 035 eine Haftkleber-Mischung
auf Basis eines Äthylen-Methylacrylat-Copolymerisates beschrieben. Diese Haftklebermischung, die neben dem Äthylencopolymerisat als weitere wesentliche Komponente ein klebrigmachendes Harz enthält, besitzt bereits bei Raumtemperatur eine hohe Oberflächenklebrigkeit und eignet sich daher
zur Herstellung selbstklebender Materialien. Derartige
Haftklebemassen lassen sich allein unter Anwendung von
Druck mit diversen Stoffen, wie Holz, Metall, Gummi, Kunststoffe etc., verbindungen. Mittels dieser Haftkleber-Mischungen lassen sich daher leicht und schnell beliebige
Verbundsysteme herstellen. Die Haftfestigkeit dieser Verbundsysteme ist jedoch im Vergleich zum Einsatz von Festklebern relativ gering.

In der US-PS 3 926 878 werden Schmelzkleber-Mischungen aus
einem Äthylen-Acrylat-Copolymerisat und einem hydrierten

Vo/Fe

aromatischen Kohlenwasserstoffharz beschrieben. Diese Schmelzkleber, die ihre Hafteigenschaften erst im aufgeschmolzenen Zustand entwickeln, können zur Herstellung von Überzügen oder Verbundsystemen mit verschiedenen Substraten, wie Metall, Papier, Holz oder Kunststoffen, eingesetzt werden. Damit eine gute Haftfestigkeit erzielt wird, müssen die Copolymerisate in diesen Schmelzkleber-Mischungen ein relativ niedriges Molekulargewicht besitzen und/oder zur Verbesserung der Hafteigenschaften mit Wachsen oder thermoplastischen Harzen abgemischt werden. Weiterhin wird die Herstellung von thermoplastischen Schichtstoffen unter Einsatz der Schmelzkleber auf Basis von Äthylen-Acrylat-Copolymerisaten bei Verarbeitungstemperaturen vorgenommen, die unterhalb der Verarbeitungstemperaturen der zu verbindenden Thermoplaste liegt. Man ist dadurch bei der Verwendung der Schmelzkleber in der Wahl der Verarbeitungsverfahren eingeschränkt, so daß man beispielsweise bei Einsatz der Schmelzkleber keine Koextrusionsverfahren zur Herstellung der Verbundsysteme einsetzen kann.

Koextrusionsverfahren zur Herstellung von thermoplastischen Schichtstoffen lassen sich nur mit solchen Substanzen als haftvermittelnder Komponente durchführen, deren Verarbeitungstemperatur in der gleichen Größenordnung wie die Verarbeitungstemperaturen der zu verbindenden Kunststoffe liegt und die ein ähnliches rheologisches Verhalten wie diese aufweisen. Solche Substanzen werden im allgemeinen als Haftvermittler bezeichnet.

Es wurde nun gefunden, daß bestimmte Äthylen-Acrylat-Copolymerisate mit hohem Molekulargewicht auch ohne den Zusatz der sonst üblichen und notwendigen Modifizierungsmittel, wie Wachse und/oder Harze, als Haftvermittler für die Herstellung von Schichtstoffen aus bestimmten thermoplastischen Kunststoffen eingesetzt werden können.

Gegenstand der vorliegenden Erfindung sind somit Schichtstoffe aus mindestens zwei voneinander verschiedenen Schichten A und C aus thermoplastischen Kunststoffen, die durch
eine Haftvermittlerschicht B miteinander verbunden sind,
dadurch gekennzeichnet, daß die Haftvermittlerschicht B im
wesentlichen aus einem Äthylen-Alkylacrylat-Copolymerisat
besteht, welches 15 bis 80 Gew.% eines Alkylacrylats mit
1 bis 4 Kohlenstoffatomen im Alkylrest einpolymerisiert
enthält und welches einen Schmelzindex bei 190°C und
2,16 kp im Bereich von 1 bis 40 g/10 min (DIN 53 735)besitzt, und die Schichten A und C aus einem Olefinpolymerisat, einem gegebenenfalls schlagzäh modifizierten Styrolpolymerisat oder Styrolcopolymerisat, einem chlorhaltigen
Polymeren, einem Polyamid, Polycarbonat, Polyvinylalkohol
und/oder Polyurethan aufgebaut sind.

Die Haftvermittlerschicht B der erfindungsgemäßen Schichtstoffe besteht im wesentlichen aus einem Äthylen-Alkylacrylat-Copolymerisat, welches sich von Alkylacrylaten mit
1 bis 4 Kohlenstoffatomen im Alkylrest ableitet. Geeignete
Alkylacrylate für die Herstellung dieser Copolymerisate
sind Methylacrylat, Äthylacrylat, Propylacrylat, n-Butylacrylat und iso-Butylacrylat. Die Copolymerisate werden
in üblicher und bekannter Weise durch Copolymerisieren von
Äthylen und den Alkylacrylaten bei Drücken oberhalb 500 Atmosphären und Temperaturen zwischen 150 und 400°C in Gegenwart radikalischer Polymerisationsinitiatoren hergestellt.
Die erfindungsgemäß als Haftvermittler einzusetzenden Äthylen-Alkylacrylat-Copolymerisate sollen dabei 15 bis 80 Gew.%,
vorzugsweise 30 bis 70 Gew.%, der Alkylacrylate einpolymerisiert enthalten. Geeignete Copolymerisate haben im allgemeinen einen Schmelzindex von 1 bis 40 g/10 min bei 190°C
und 2,16 kp (DIN 53 735). Ihr Erweichungspunkt soll dem Erweichungspunkt der zu verbindenden thermoplastischen Kunststoffe angepaßt sein und liegt im allgemeinen im Bereich von 125 bis 140°C (DIN 1995, Ring und Kugel). Der günstigste Bereich für den Alkylacrylatgehalt der Copolymerisate und für ihren Schmelzindex kann variieren und richtet sich zum einen nach dem eingesetzten Alkylacrylat und zum anderen nach den zu verbindenden thermoplastischen Kunststofen. Beispielsweise hat sich für die Äthylen-Alkylacrylat-Copolymerisate, die eine geradkettige Alkylgruppe im Acrylat-Baustein enthalten, gezeigt, daß der optimale Gehalt an Alkylacrylat im Copolymerisat mit der Zahl der Kohlenstoffatome im Alkylrest steigt. Für Schichtstoffe, bei denen die Schicht A oder die Schicht C aus einem Polyolefin besteht, ist es vorteilhaft, wenn das Äthylen-Alkylacrylat-Copolymerisat in der Haftvermittlerschicht B einen möglichst hohen Anteil an Äthylen einpolymerisiert enthält. Die günstigsten Bereiche für die Zusammensetzung des Copolymerisats und seinen Schmelzindex lassen sich für eine gegebene Anwendung durch wenige einfache Versuche ermitteln. Als besonders günstig für den erfindungsgemäßen Einsatz als Haftvermittler haben sich die Äthylen-Methylacrylat-Copolymerisate erwiesen, insbesondere solche mit einem Methylacrylat-Gehalt im Bereich von 30 bis 50 Gew.% und einem Schmelzindex im Bereich von 5 bis 40 g/10 min.

Für den Aufbau der Schicht A und der Schicht C der neuen Schichtstoffe können folgende thermoplastische Kunststoffe eingesetzt werden:

Olefinpolymerisate, wie Polyäthylen, Polypropylen, Polybuten oder Copolymerisate der Olefine untereinander;

Styrolpolymerisate, die gegebenenfalls mit einen Kautschuk schlagfest modifiziert sein können, insbesondere Polystyrol, mit Polybutadien oder Styrol-Butadien-Blockpolymerisaten schlagfest modifiziertes Polystyrol, Copolymerisate des Styrols mit Acrylnitril, deren Gehalt an einpolymerisiertem

Acrylnitril im Bereich von 10 bis 80 Gew.% liegt, Copolymerisate des Styrols mit $\alpha$-Methylstyrol; die sogenannten ABS-, ASA- und AES-Polymerisate, bei denen Styrol/Acrylnitril-Copolymerisate mit Dien-Kautschuken, kautschukartigen vorzugsweise vernetzten Acrylat-Polymerisaten bzw. mit kautschukartigen Äthylen-Propylen-Polymerisaten schlagfest modifiziert wurden;

chlorhaltige Polymere, wie Polyvinylchlorid, Polyvinylidenchlorid, Copolymerisate des Vinylchlorids oder des Vinylidenchlorids, chlorierte Polyolefine oder nachchloriertes Polyvinylchlorid;

Polyvinylalkohol oder Äthylen-Vinylalkohol-Polymerisate;

ferner auch Polyurethane, Polycarbonate oder Polyamide.

Die Schichten A und C der neuen Schichtstoffe sind dabei voneinander verschieden, d.h. sind aus unterschiedlichen thermoplastischen Kunststoffen der genannten Art aufgebaut. Für die Herstellung der Schichten A und C können auch Mischungen der genannten thermoplastischen Kunststoffe verwendet werden, sofern diese Kunststoffe miteinander verträglich sind und homogene Mischungen geben. Bevorzugt sind Verbunde, bei denen die Schicht A aus einem Styrolpolymerisate, insbesondere Polystyrol, mit einem Dienkautschuk schlagfest modifizierten Polystyrol, ABS-, ASA- oder AES-Polymerisaten besteht. Die Schicht C besteht dann vorteilhafterweise aus einem anderen Styrolpolymerisat, einem chlorhaltigen Polymeren, insbesondere einemVinylchloridpolymerisat, oder einem Olefinpolymerisat, wie Polyäthylen oder Polypropylen. Bei anderen, ebenfalls interessanten Verbundsystemen, besteht die Schicht A aus einem Olefinpolymerisat, insbesondere Polyäthylen, und die Schicht C aus einem chlorhaltigen Polymerisat, insbesondere Polyvinyl-

0000558

⌐chlorid.

Um mit einem Äthylen-Alkylacrylat-Copolymerisat als Haftvermittler gemäß der vorliegenden Erfindung eine hohe Anwendungsbreite zu erreichen, kann es sinnvoll sein, dessen
thermoplastisches Fließverhalten gezielt und nachhaltig
durch Vermischen mit Zusätzen zu beeinflussen. So kann man
durch Zugabe von Schmiermitteln, wie z.B. Butylstearat oder
Paraffinöl in der Größenordnung von ca. 1 bis 10 Gew.% den
Schmelzindex zu erhöhen. Der Schmelzindex nimmt ab, wenn
man z.B. anorganische Füllstoffe, wie z.B. Talk oder Kalksteinmehl, zumischt oder wenn man schwerer fließende,
gegebenenfalls teilweise vernetzte Elastomere zugibt, z.B.
auf Basis von Polybutadien, Polyacrylaten oder von Styrol-
Butadien-Styrol-Blockpolymerisaten. Solche Zusätze sind bis
zu Konzentrationen von ca. 40 bis 45 Gew.%, bezogen auf
die Haftvermittlerschicht, sinnvoll.

Als besonders günstig, gegebenenfalls in Kombination mit
den letzgenannten Elastomeren, hat es sich erwiesen, wenn
das als Haftvermittler dienende Äthylen-Alkylacrylat-Copolymerisat geringe Mengen eines mehrwertigen Alkohols, beispielsweise Neopentylglykol, zur Verringerung des Fließverhaltens, zugemischt enthält. Die Menge an zugemischtem
Alkohol liegt im allgemeinen im Bereich von 0,1 bis 1,5
Gew.%, bezogen auf das Äthylen-Alkylacrylat-Copolymerisat.
Die Haftvermittlerschicht B kann neben dem Äthylen-Alkylacrylat-Copolymerisat als wesentlichem Bestandteil auch
noch aus bis zu 30 Gew.% an anderen, mit diesem Copolymerisat verträglichen Kunststoffen aufgebaut sein. So wurde
gefunden, daß durch den Zusatz von Styrol-Butadien-Blockpolymerisaten mit einem Styrolgehalt von 5 bis 45 Gew.% zu
dem Äthylen-Alkylacrylat-Copolymerisat in der Schicht B
die haftvermittelnden Eigenschaften verbessert werden können. Als besonders vorteilhaft haben sich dabei insbesondere

Styrol-Butadien-Blockpolymerisate des Typs A-B, A-B-A und A-B-A-B (A = Polystyrol-Block, B = Dienpolymerisat-Block) erwiesen. Die thermoplastischen Kunststoffe, die für die Herstellung der Schichten A und C eingesetzt werden, können auch solche Zusatzstoffe wie Farbstoffe, Pigmente, Stabilisatoren, UV-Absorber, Antistatika, Flammschutzmittel etc., im allgemeinen in Mengen bis zu 30 Gew.%, bezogen auf die Schicht A bzw. die Schicht C, enthalten.

Weiterhin ist es möglich, den beim Herstellen und Verarbeiten der neuen Schichtstoffe auftretenden Abfall dadurch wieder zu verwenden, daß man ihn einer oder mehreren Schichten der neuen Schichtstoffe wieder zusetzt. Vorzugsweise wird der bei der Herstellung und Verarbeitung anfallende Abfall der Schicht B zugesetzt, soll dabei jedoch im allgemeinen nicht mehr als ca. 15 Gew.% der Schicht B ausmachen.

Mittels der zum Zwecke der Erfindung einzusetzenden hochmolekularen Äthylen-Alkylacrylat-Copolymerisate lassen sich zwischen den genannten thermoplastischen Kunststoffen Verbunde mit sehr guten Haftfestigkeiten herstellen. Bei Einsatz von Äthylen-Methylacrylat-Copolymerisaten als Haftvermittler und Styrolpolymerisaten, chlorhaltigen Polymeren und/oder Polyolefinen für die Schichten A und C lassen sich praktisch untrennbare Verbunde erhalten. Dies war überraschend, da, wie in der US-PS 3 926 878 beschrieben und allgemein bekannt ist, die Hafteigenschaften bei Haftvermittlern mit höheren Molekulargewichten im allgemeinen ungenügend sind und um so schlechter liegen je höher das Molekulargewicht ist. Gute Hafteigenschaften mit hochmolekularen Äthylencopolymerisaten ließen sich bislang nur durch Zumischen von Wachsen oder thermoplastischen Harzen erzielen. Beim Einsatz der beschriebenen Äthylen-Alkylacrylat-Copolymerisate als Haftvermittler für die genannten

thermoplastischen Kunststoffe kann nun auf den Zusatz dieser haftverbessernden Zusätze verzichtet werden, und es
werden dennoch sehr gute Haftfestigkeiten erzielt.

Die Herstellung der erfindungsgemäßen Schichtstoffe kann auf
verschiedene Arten in an und für sich üblicher und bekannter
Weise  beispielsweise durch kurzzeitiges Erhitzen und Verpressen der Einzelschichten, erfolgen. Vorzugsweise werden
die Schichtstoffe bei Massetemperaturen zwischen 150 und
250°C nach den bekannten Koextrusions-Verfahren hergestellt
entweder in Mehrschichtdüsen - d.h. in Blöcken, in denen
mehrere Breitschlitzdüsen übereinander angeordnet sind;
der hochplastische Schichtstoff verläßt meist durch einen
gemeinsamen Düsenspalt den Block - oder in Adapter-Koextrusionsanlagen - d.h. Anlagen, in denen im Zulaufkanal zu
einer Breitschlitzdüse mehrere Kunststoffschmelzen laminar
fließend übereinander geschichtet und in der Breitschlitzdüse gemeinsam breitgelegt werden - oder in Ringdüsen-Koextrusionsanlagen, die z.B. aus konzentrisch ineinander angeordneten Ringdüsen bestehen können.

Die erhaltenen Bänder bzw. Schläuche werden dann zweckmäßigerweise noch im plastischen Zustand, beispielsweise mit
Hilfe eines Walzenpaares oder durch Einwirkung von Druckluft, zusammengepreßt. Durch Variation der Extruderzahl
kann die Dicke der einzelnen Schichten variiert werden.
Die Schichtdicke hängt im wesentlichen vom Anwendungsgebiet
ab. Bei Folien kommen im allgemeinen Schichtdicken von 0,1
bis 20 mm in Frage.

Die nach der Erfindung hergestellten Schichtstoffe sind auf
verschiedenen Gebieten verwendbar und lassen sich in Form
von Folien, beispielsweise als Verkleidungen, Abdeckungen,
Wandelemente, Dekorplatten usw. anwenden. Insbesondere lassen sie sich unter üblichen Temperatur- und Druckbedingungen

durch Tiefziehen zu verschiedenartigen Formteilen verarbeiten und umformen. Solche Formteile können als mulden- oder schalenförmige Körper mit unterschiedlichen Konturen und Abmessungen ausgebildet sein. Sie können jedoch auch als Rollen- oder Bahnenware mit einem wiederkehrenden Profil, wie z.B. Rippen, Sicken, Rastern, Napfen oder anderen Versteifungselementen versehen sein. Anwendungsgebiete für Formteile sind Maschinenabdeckungen, Gehäuseteile, Bauelemente, Behälter, Auffangschalen, Verschlußkappen und anderes mehr. Die geformten Schichtstoffe können beispielsweise auf dem Verpackungssektor, in der Kühlschrank- und Möbelindustrie eingesetzt werden.

Die in den Beispielen angegebenen Teile und Prozente beziehen sich auf das Gewicht.

Beispiel 1

Ein granuliertes Äthylen-Methacrylat-Polymerisat mit ca. 40 % Methylacrylat, dem Schmelzindex von 25 g/10 min bei 190°C und 2,16 kp und einem Erweichungspunkt von 137°C (DIN 1995, Ring und Kugel) wurde bei 200°C in einer dampfbeheizten Plattenpresse zu einer Preßplatte mit den Abmessungen 1 x 200 x 2 000 mm verpreßt. Diese Platte wurde zwischen je eine 1 mm dicke Platte aus schlagfestem Polystyrol mit eine Wärmeformbeständigkeit nach Vicat/B von 90°C (DIN 53 460) und Polyäthylen der Dichte $0,929/cm^3$ gelegt. Bei 220°C wurde in der gleichen Plattenpresse ein praktisch untrennbarer Dreischichtstoff hergestellt.

Beispiel 2

Ein Äthylen-Äthylacrylat-Polymerisat mit ca. 35 % Äthylacrylat, einem Erweichungspunkt von ca 132°C (DIN 1995,

Ring und Kugel) und dem Schmelzindex 12 g/10 min, gemessen bei 190°C und 2,16 kp (DIN 53 735) wurde mit 40 % eines Styrol-Butadien-Styrol-Blockpolymerisates, welches 32 % Styrol einpolymerisiert enthielt, mit Hilfe eines gegenläufig rotierenden, dampfbeheizten Walzenpaares bei 190°C in der Schmelze gemischt. Die Mischung hatte den Schmelzindex 1,3 g/10 min, bei 190°C und 2,16 kp, und wurde in einer Mehrschicht-Koextrusionsanlage zu einem Dreischichtstoff aus schlagfestem Polystyrol (Schicht A), Haftvermittlerschicht und Polybutylenterephthalat (Schicht C) verarbeitet.

Patentanspruch

Schichtstoffe aus mindestens zwei voneinander verschiedenen Schichten A und C aus thermoplastischen Kunststoffen, die durch eine Haftvermittlerschicht B miteinander verbunden sind, dadurch gekennzeichnet, daß die Haftvermittlerschicht B im wesentlichen aus einem Äthylen-Alkylacrylat-Copolymerisat besteht, welches 15 bis 80 Gew.% eines Alkylacrylats mit 1 bis 4 Kohlenstoffatomen im Alkylrest einpolymerisiert enthält und einem Schmelzindex bei 190°C und 2,16 kp im Bereich von 1 bis 40 g/10 min besitzt, und die Schicht A und die Schicht C aus einem Olefinpolymerisat, einem gegebenenfalls schlagzäh modifizierten Styrolpolymerisat oder Styrolcopolymerisat, einem chlorhaltigen Polymeren, einem Polyamid, Polycarbonat, Polyvinylalkohol und/oder Polyurethan aufgebaut sind.

| Kategorie | Kennzeichnung des Dokuments mit Angabe, soweit erforderlich, der maßgeblichen Teile | betrifft Anspruch |
|---|---|---|
| | NL - A - 64 12768 (CHEMICAL INVES-TORS S.A.)(17.05.65) <br> * Seiten 1-10 * | 1 |
| | US - A - 3 758 431 (D.D.TAFT)(11.09.73) <br> * Spalte 2, Zeilen 59-72; Spalte 3, Zeilen 1-5; Spalte 6, Zeilen 13-22 * | 1 |
| | US - A - 3 519 531 (E.G. JAMES & R.N. MANNING)(07.07.70) <br> * Spalte 2, Zeilen 20-72; Spalte 3; Spalte 4, Zeilen 1-17; Spalte 6, Zeilen 28-57; Spalte 9, Zeilen 3-13 * | 1 |
| A | FR - A - 1 428 109 (HITACHI WIRE & CABLE LTD.)(03.01.66) | 1 |
| A | GB - A - 1 309 011 (DOW CHEMICAL)(07.03.73) | 1 |
| A | GB - A - 1 471 464 (SUMITOMO CHEMI-CAL LTD.)(27.04.77) | 1 |
| A | US - A - 3 926 878 (K. SHIMIZU & N. MINAMI)(16.12.75) | 1 |
| A | DE - A - 2 329 035 (BASF)(16.01.75) | 1 |

**EINSCHLÄGIGE DOKUMENTE**

**KLASSIFIKATION DER ANMELDUNG (Int.Cl.²)**

B 29 C 27/10
B 32 B 27/00

**RECHERCHIERTE SACHGEBIETE (Int. Cl.²)**

B 32 B

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 07-11-1978 | VAN THIELEN |

EPA form 1503.1 06.78